# EUROPEAN PATENT APPLICATION

(11) **EP 4 827 026 A1**
(43) Date of publication of application: **21.10.2026**
(21) Application number: 26171813.4
(22) Date of filing: 13.04.2026
(51) Int. Cl.: H04L 1/1867, H04L 1/1829

(54) **SUPPORT OF TIMEOUT-BASED OUT-OF-ORDER FRAME DELIVERY**

(30) Priority: 14.04.2025 US 202519178371
(71) Applicant: Nokia Technologies Oy, 02610 Espoo (FI)
(72) Inventor: DEZFOULI, Behnam, San Jose (US); LEE, Alvin, Fremon (US); DOPPLER, Klaus Franz, Albany (US)
(74) Representative: Nokia EPO representatives

(57) **Abstract**

Embodiments of the present disclosure relate to support of timeout-based out-of-order (OOO) frame delivery. In an example method, a device collects recovery time intervals of missing and erroneous frames over time; calculates a distribution of the recovery time intervals of the missing and erroneous frames; and obtains mapping of queues capable of OOO frame delivery by assigning at least one timeout value to at least one queue capable of OOO frame delivery based on the distribution of the recovery time intervals and a number of the at least one queue.

## Description

### FIELD

Various example embodiments relate to the field of telecommunication and in particular, to methods, devices, apparatuses and computer readable storage medium for support of timeout-based out-of-order (OOO) frame delivery.

### BACKGROUND

A communication network can be seen as a facility that enables communications between two or more communication devices, or provides communication devices access to a data network. A wireless communication network is one example of a communication network.

Such communication networks may operate in accordance with standards, such as those promulgated by Third Generation Partnership Project (3GPP) or Institute of Electrical and Electronics Engineers (IEEE). For example, 3GPP standards cover cellular communication networks from the first generation (1G) to the fifth generation (5G) and beyond. IEEE standards cover a variety of wired and wireless communication technologies used in Local Area Networks (LANs), Personal Area Networks (PANs), Broadband Wireless Access (BWA) and so on. These standards ensure interoperability, performance, and reliability within a communication network and across different communication networks.

### SUMMARY

In general, example embodiments of the present disclosure provide solutions for support of timeout-based out-of-order (OOO) frame delivery.

In a first aspect, there is provided a device, comprising: at least one processor; and at least one memory storing instructions that, when executed by the at least one processor, cause the device at least to: collect recovery time intervals of missing and erroneous frames over time; calculate a distribution of the recovery time intervals of the missing and erroneous frames; and obtain mapping of queues capable of out-of-order (OOO) frame delivery by assigning at least one timeout value to at least one queue capable of OOO frame delivery based on the distribution of the recovery time intervals and a number of the at least one queue.

In a second aspect, there is provided a method. The method comprises: collecting recovery time intervals of missing and erroneous frames over time; calculating a distribution of the recovery time intervals of the missing and erroneous frames; and obtaining mapping of queues capable of out-of-order (OOO) frame delivery by assigning at least one timeout value to at least one queue capable of OOO frame delivery based on the distribution of the recovery time intervals and a number of the at least one queue.

In a third aspect, there is provided an apparatus. The apparatus comprises: means for collecting recovery time intervals of missing and erroneous frames over time; means for calculating a distribution of the recovery time intervals of the missing and erroneous frames; and means for obtaining mapping of queues capable of out-of-order (OOO) frame delivery by assigning at least one timeout value to at least one queue capable of OOO frame delivery based on the distribution of the recovery time intervals and a number of the at least one queue.

In a fourth aspect, there is provided a non-transitory computer readable medium comprising program instructions for causing an apparatus to perform a method comprising collecting recovery time intervals of missing and erroneous frames over time; calculating a distribution of the recovery time intervals of the missing and erroneous frames; and obtaining mapping of queues capable of out-of-order (OOO) frame delivery by assigning at least one timeout value to at least one queue capable of OOO frame delivery based on the distribution of the recovery time intervals and a number of the at least one queue.

In a fifth aspect, there is provided a computer program comprising instructions, which, when executed by an apparatus, cause the apparatus at least to perform a method comprising: collecting recovery time intervals of missing and erroneous frames over time; calculating a distribution of the recovery time intervals of the missing and erroneous frames; and obtaining mapping of queues capable of out-of-order (OOO) frame delivery by assigning at least one timeout value to at least one queue capable of OOO frame delivery based on the distribution of the recovery time intervals and a number of the at least one queue.

It is to be understood that the summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Some example embodiments will now be described with reference to the accompanying drawings, where:
FIG. 1 illustrates an exemplary communication network in which various aspects of the present disclosure may be implemented;
FIG. 2 illustrates an example head-of-line (HoL) blocking scenario where a medium access medium (MAC) layer requires require in-order (IO) frame delivery to upper layers.
FIG. 3 illustrates an example of OOO frame delivery from MAC layer to upper layers;
FIG. 4 illustrates an example scenario where OOO frame delivery from MAC layer to upper layers causes unnecessary frame retransmissions over the wireless and wired links;
FIG. 5 illustrates an example process of timeout-based OOO frame delivery in accordance with some embodiments of the present disclosure;
FIG. 6 illustrates an example timeout procedure for a timeout-aware OOO queue in accordance with some embodiments of the present disclosure;
FIG. 7 illustrates another example timeout procedure for a timeout-aware OOO queue in accordance with some embodiments of the present disclosure;
FIG. 8 illustrates an example distribution of frame recovery time intervals in accordance with some embodiments of the present disclosure;
FIG. 9 illustrates a process of a non-AP STA that prepares and shares mapping of OOO-capable queues in accordance with some embodiments of the present disclosure;
FIG. 10 illustrates an example frame including an "OOO Queue Mapping" field in accordance with some embodiments of the present disclosure;
FIG. 11 illustrates an example implementation of the "OOO Queue Mapping" field in accordance with some embodiments of the present disclosure;
FIG. 12 illustrates another example implementation of the "OOO Queue Mapping" field in accordance with some embodiments of the present disclosure;
FIG. 13 illustrates a flowchart of a method implemented by a device in accordance with some embodiments of the present disclosure.
FIG. 14 illustrates a flowchart of a method implemented by a device according in accordance with some embodiments of the present disclosure.
FIG. 15 illustrates a simplified block diagram of an apparatus that is suitable for implementing embodiments of the present disclosure; and

Throughout the drawings, the same or similar reference numerals represent the same or similar element.

### DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. The disclosure described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as Global System for Mobile Communications (GSM), General Packet Radio Service (GPRS), Wideband Code Division Multiple Access (WCDMA), Long Term Evolution (LTE), LTE-Advanced (LTE-A), New Radio (5G NR), High-Speed Packet Access (HSPA), Narrow Band Internet of Things (NB-IoT), Wireless Local Area Network (WLANs), Wireless Personal Area Network (WPANs), Worldwide Interoperability for Microwave Access (WiMAXs) and so on. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), a NR NB (also referred to as a gNB), a Remote Radio Unit (RRU), a radio header (RH), a remote radio head (RRH), a relay, a low power node such as a femto, a pico, and so forth, depending on the applied terminology and technology.

As used herein, the term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. In the following description, the terms "terminal device", "communication device", "terminal", "user equipment" and "UE" may be used interchangeably.

WLANs, commonly implemented under IEEE 802.11 standards (i.e., Wireless Fidelity (Wi-Fi)), enables high-speed wireless connectivity across diverse environments, including residential, enterprise, industrial, and public spaces. These networks support bidirectional communication between stations (STAs), facilitating data, voice, and multimedia transmission.

A STA refers to an entity that can be addressed uniquely (i.e., it has a single and unique Medium Access Control (MAC) address) and that provides 802.11 physical (PHY) and MAC functions. STAs can communicate with each other directly. A set of STAs that can communicate with each other form a Basic Service Set (BSS), and the area that their signals cover forms a Basic Service Area (BSA). A STA may be implemented in an access point (AP) or implemented as a non-AP STA depending on its functions.

An AP refers to a device in WLAN that provides wireless devices with wireless access to a wired or a wireless network. The AP may serve as a hub for the WLAN and may be regarded as a special kind of network device implemented in WLAN. The AP typically has access or an interface to a Distribution System (DS) or another type of wired/wireless network that carries traffic in and out of the BSS. For example, the AP comprises a STA and a DS access function (DSAF) and enables access to the wired network for other STAs over the wireless medium. The AP may be responsible for sending and receiving wireless signals, network connection management and data forwarding. By way of example rather than limitation, an AP may also be referred to as a Wi-Fi router, a Radio Router, a Radio Transceiver, a Transceiver Function ("TF"), a Wireless Access Node, a Wireless Switch, an Access Bridge, or some other terminology, and so forth.

A non-AP STA refers to a wireless device that connects to an AP to access the network. A non-AP STA serves as a user of the WLAN and may be regarded as a special kind of terminal device implemented in WLAN. Non-AP STAs are typically end-user devices that do not provide access to other devices but rather consume network services. By way of example rather than limitation, a non-AP STA may also be referred to as a wireless client, a client STA, a subscriber STA, a subscriber unit, a remote STA, a remote terminal, an end device, an access terminal, a terminal device, a mobile station, a user terminal, a user agent, a user device, user equipment, or some other terminology. Examples of the terminal devices may be implemented as a non-AP STA if located in a WLAN, and duplications thereof will be omitted.

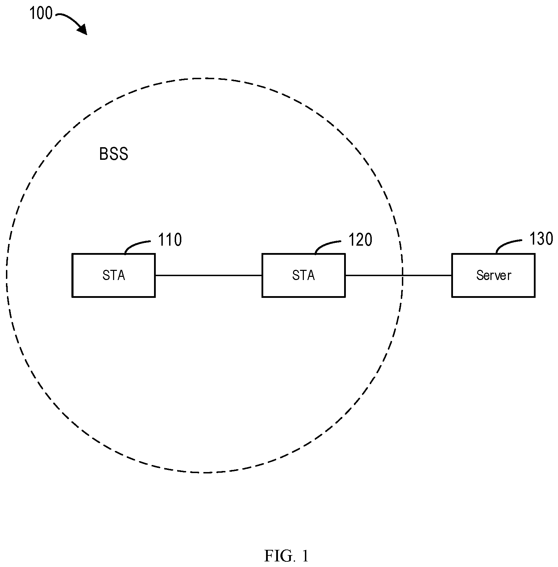

Principle and embodiments of the present disclosure will be described in detail below with reference to the accompanying drawings. Reference is first made to Fig. 1A, which illustrates an exemplary communication network100 in which various aspects of the present disclosure may be implemented. As shown, the communication network100 includes a first wireless station (STA) 110 functioning as a non-access point (non-AP) station and a second wireless STA 120 functioning as an access point (AP). The STA 120 is communicatively coupled to a server 130 via suitable wired or wireless communication links, such as an Ethernet link, universal serial bus (USB), or integrated system bus in the case of co-located components. The STA 110 and STA 120 may communicate using infrastructure-mode IEEE 802.11 protocols and may also engage in peer-to-peer (P2P) communication.

The STA 110 may be implemented as any IEEE 802.11-compliant client device, including laptops, smartphones, or wearable devices. It includes a wireless transceiver configured to transmit and receive 802.11 frames over a wireless channel. The STA 120, operating as an AP, may be implemented as a router, gateway, or enterprise-grade access point and is capable of managing one or more associated STAs, coordinating wireless access, and forwarding traffic to/from the server 130.

The STA 120 is configured to manage communication with one or more STAs in a basic service set (BSS), including performing functions such as association, authentication, traffic scheduling, channel access coordination, and quality-of-service (QoS) enforcement.

In the illustrated embodiment, the STA 120 is connected to the server 130. The server 130 may host one or more applications, services, or data resources accessible to the STA 110 through the STA 120. Examples of services provided by the server 130 may include video streaming, web-based applications, file storage, gaming services, real-time communication tools, or control systems for connected devices.

In operation, the STA 110 may discover the STA 120 by passively receiving beacon frames or actively probing the wireless medium. Once the STA 120 is identified, the STA 110 may initiate an association process to join the BSS. Upon successful association and authentication, the STA 110 and AP 120 may establish a bidirectional communication session, allowing the exchange of MAC protocol data units (MPDUs), MAC Service Data unit (MSDUs) and higher-layer protocol data.

It is to be understood that the number of APs and non-AP STAs is only for the purpose of illustration without suggesting any limitations. The communication system 100 may include any suitable number of APs and non-AP STAs adapted for implementing embodiments of the present disclosure. Although not shown, in some implementations, peer-to-peer connections or ad-hoc networks may be implemented within the communication system 100.

Communications in the communication system 100 may be implemented according to any proper communication protocol(s), comprising, but not limited to, IEEE 802.11a, IEEE 802.11b, IEEE 802.11g, IEEE 802.11n, IEEE 802.11ac, IEEE 802.11ax, IEEE 802.11be, IEEE 802.11bn and/or any other protocols currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future.

Further advancements in Wi-Fi technologies are necessary to meet the growing demands. For instance, due to limited reliability and non-deterministic channel access, the latency of Wi-Fi stations fails to meet user requirements, particularly for latency-sensitive applications such as Virtual Reality (VR), Mixed Reality (MR), and Augmented Reality (AR) (collectively known as XR). These emerging technologies demand ultra-low latency connections to deliver smooth, immersive, and responsive user experiences.

In IEEE 802.11 wireless networks, frame loss is a prevalent problem that can significantly impact performance in terms of communication delay and reliability. Frame losses stem from various factors, including the dynamic behavior of rate adaptation algorithms, physical layer interference, and user mobility. Rate adaptation algorithms can dynamically adjust the transmission rate based on varying channel conditions to maximize throughput. However, these adjustments are not always optimal, often resulting in increased frame loss, especially under rapidly changing network conditions or in environments with fluctuating signal quality. Interference from other wireless devices or overlapping networks can also introduce noise and collisions, further exacerbating frame loss. Additionally, user mobility leads to changes in signal strength and multipath fading, causing transient disruptions in connectivity.

A limitation in current MAC layer queuing methods is that it requires in-order (IO) data delivery to upper layers. This can lead to head-of-line (HoL) blocking.

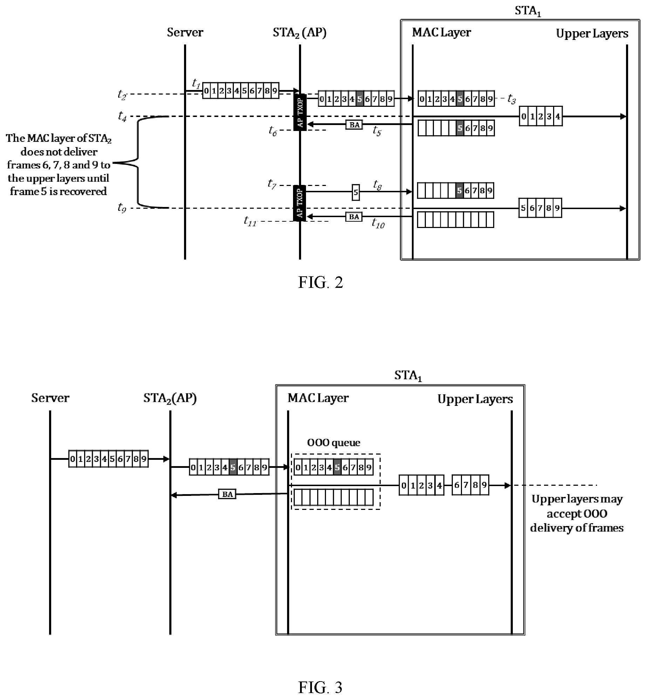

FIG. 2 illustrates an example HoL blocking scenario where a MAC layer requires IO frame delivery to upper layers, where STA₂ is an AP STA sending downlink (DL) data to STA₁ which is a non-AP STA.

As illustrated, STA₂ (AP) receives frames 0 through 9 from a server (e.g., a cloud server) at time *t₁.* To send these frames to STA₁ (a non-AP STA), STA₂ contends and wins a Transmission Opportunity (TXOP), which starts at time *t₂* and ends at time *t₆.* Assume all these frames are mapped to the same Traffic Identifier (TID) by STA₂, and when received by STA₁, these frames are placed in the queue assigned to the used TID. STA₂ transmits the buffered frames (i.e., frames 0 through 9) to STA₁ at time *t₃*. When STA₂ sends these frames to STA₁, all frames except for frame 5 are successfully received, creating a gap in frame reception. Since IO frame delivery is enforced by the MAC layer of STA₁, frames 6, 7, 8 and 9 are not delivered to the upper layers (e.g., IP, transport, or application layer), waiting until a retransmission of frame 5 is received. When an acknowledgement frame, e.g. a Block Acknowledgment (BA) is sent from STA₁ to STA₂, the TXOP acquired by the AP (between *t₂* to *t₆*) does not provide sufficient time to retransmit this frame to STA₁. Frame 5 is retransmitted by STA₂ during its next TXOP (between *t₇* to *t₁₁*)*.* Therefore, during *t₄* to *t₉*, frames 6, 7, 8 and 9 are kept in the MAC layer's queue assigned to these frames (i.e., assigned to the queue used to store the frames belonging to this TID). However, unknown to the MAC layer, one or more of the upper layers (e.g., application layer) may accept out-of-order (OOO) frame delivery for this traffic stream. For instance, the application layer may use methods such as forward recovery (FEC) to recover frame 5. When STA₂ acquires another TXOP at time *t₇,* STA₂ retransmits frame 5 at time *t₈.* The MAC layer of STA₁ delivers frames 5, 6, 7, 8 and 9 to the upper layer at time *t₉* in an IO fashion. In this process, frames 6, 7, 8 and 9 are blocked within the MAC layer's queue of STA₁ from *t₄* to time *t₉* until the missing frame, i.e., frame 5, is recovered by the MAC layer.

To address this issue, some methods can enable a subset of MAC queues, capable of OOO frame delivery and associated with specific TIDs, and deliver OOO-received frames to upper layers. There are two main enhancements: (1) enabling more flexible TID-to-Access Category (AC) mapping to allow demultiplexing of multiple IO streams across different TIDs, and (2) supporting optional OOO delivery at the MAC layer for select TIDs where IO delivery is not critical and higher-layer protocols (e.g., Quick UDP Internet Connections (QUIC)) can handle reordering. To maintain security and reliability, this involves adjustments like using separate Packet Number (PN) spaces for OOO traffic and a sliding PN window for replay detection. Evaluations show that these enhancements significantly reduce packet and frame latency under various network conditions, particularly in congested or lossy environments.

FIG. 3 illustrates an example of OOO frame delivery from MAC layer to upper layers, where frame delivery delay to upper layers is reduced. Since the set of frames were mapped to an OOO queue (i.e., a queue capable of delivering frames in an OOO fashion), the MAC layer forwards the frames in the order that they are received, without waiting for the recovery of frame 5.

Applications may demand various levels of reliability and timeliness for frame delivery from the MAC layer to upper layers. Also, when a frame is not successfully delivered over a wireless link, it is preferable to recover the frame at the MAC layer instead of using upper-layer methods such as Transmission Control Protocol (TCP) or QUIC, due to their significantly higher overhead in terms of processing overhead and end-to-end frame transmission. Additionally, the current proposals do not allow applications to establish tradeoffs between reliability and timeliness of frame delivery.

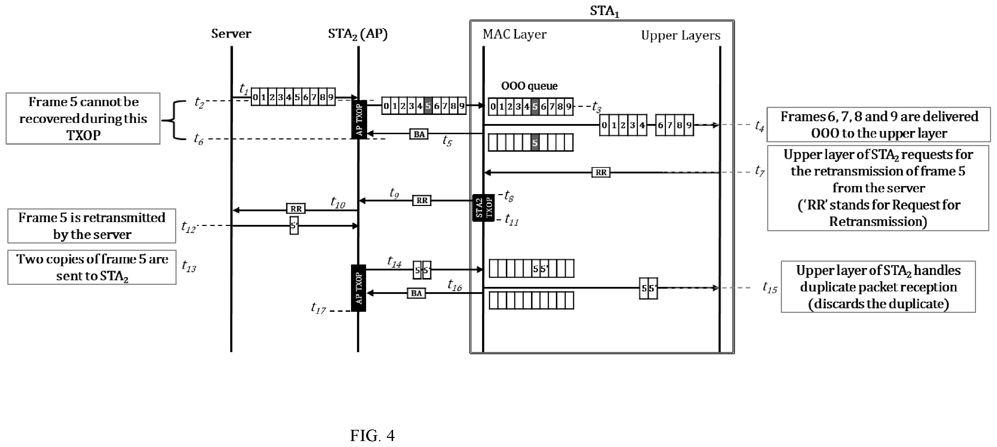

FIG. 4 shows an example scenario where OOO frame delivery from MAC layer to upper layers causes unnecessary frame retransmissions over the wireless and wired links, which results in waste of communication and computational resources.

The server and STA₁ (a non-AP STA) exchange real-time traffic (e.g., voice, video) via STA₂ (AP). Assuming all these frames are mapped to the same TID by STA₂, and when received by STA₁, these frames are placed in the queue assigned to the used TID. On STA₁, the queue assigned to this TID is an OOO delivery capable queue, denoted as 'OOO queue'. STA₂ receives frames 0 through 9 at time *t₁.* STA₂ transmits these frames to STA₁ at time *t₃*. Except frame 5, the rest of the frames are successfully received by STA₁. Since this data traffic (i.e., frames 0 through 9) is mapped to an OOO queue, these frames are immediately (after MAC layer processing) delivered to the upper layers at time *t₄.* The MAC layer sends a BA frame at time *t₅*, confirming the receipt of all frames except frame 5. Note that the action denoted by timestamp *t₅* may occur before or at the same time as the action denoted by timeslot *t₄*, depending on the implementation of MAC layer's operations. Since the TXOP of STA₂ finishes at time *t₆*, there is not enough time for STA₂ to retransmit the lost frame to STA₁ within the current TXOP. At time *t₇*, the application layer (or another entity such as TCP) of STA₁ finishes processing the data, detects the gap, and determines that frame 5 is essential and must be recovered. To this end, the application layer of STA₁ sends a Retransmission Request (RR) for frame 5, which is sent to STA₂ at time *t₉* (during STA₁'s TXOP) and then sent to the server at time *t₁₀.* Note that the RR request can be implemented as a negative-ACK sent by the application, an ACK that specifies the missing packet (e.g., Selective ACK in TCP), or some other methods. The server processes the RR and retransmits frame 5 (denoted as 5') to STA₂, reaching STA₂ at time *t₁₂.* Thus, the buffer of STA₂ includes two instances of frame 5 because STA₂ cannot differentiate between the two frames. At time *t₁₄* these two frames are sent from STA₂ to STA₁. The unnecessary transmission of RR and its corresponding retransmission result in wasted bandwidth. STA₁'s upper layer, such as TCP, was unaware that an end-to-end recovery mechanism was unnecessary to recover frame 5. In other words, the upper layers of STA₁ did not recognize that frame 5 was lost over the wireless link between STA₁ and STA₂ as opposed to the link between the server and STA₂. As a result, STA₂ retains a copy of this frame, awaiting retransmission, even though an upper-layer recovery mechanism triggers an end-to-end recovery method.

In this regard, it is proposed that one or more queues capable of OOO frame delivery support various timeout values. The timeout represents how long frames (e.g. MPDUs) will reside in the queue before OOO frame delivery to upper layers. Every OOO-capable queue is assigned a timeout value, or a timeout range, which can be determined by a non-AP STA hosting the queue, or an AP STA, or both types of STAs. The proposed methods allow the layers above the MAC layer to eliminate or reduce their frame (packet) recovery overhead. In some embodiments throughout the present disclosure, the term "queue capable of OOO frame delivery" can also be referred to as "OOO frame delivery capable queue", "OOO-capable queue", "timeout-aware OOO queue", or simply "OOO queue."

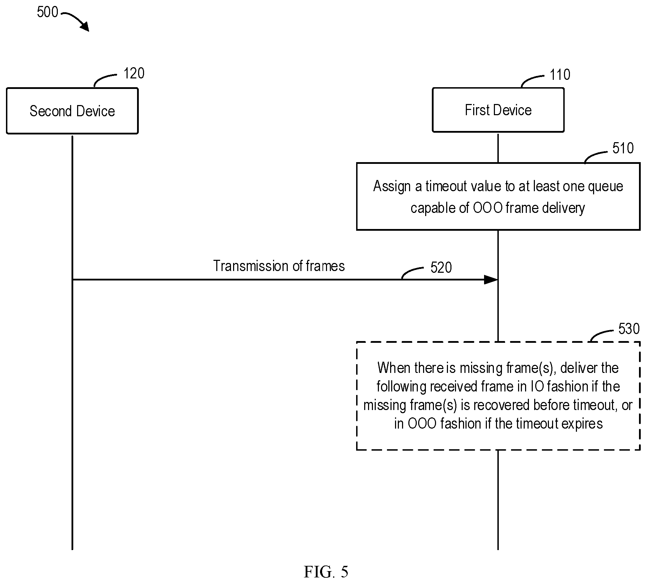

FIG. 5 illustrates an example process 500 of timeout-based OOO frame delivery in accordance with some embodiments of the present disclosure. The process 500 may be implemented in the communication system 100 in FIG. 1 or other communication systems. For the purpose of discussion, the process 500 will be described with reference to FIG. 1. The process 500 involve a first device and a second device which can be implemented as the non-AP STA 110 and the AP STA 120 as illustrated in FIG. 1, respectively.

At 510, the first device 110 assigns a timeout value to at least one queue capable of OOO frame delivery, wherein the timeout value represents a maximum duration in which a received frame is kept in the at least one queue before being delivered to upper layers or forwarded. In some embodiments, the first device 110 may assign different timeout values to multiple OOO-capable queues. In some embodiments, the first device 110 may associate one or more TID(s) with an OOO-capable queue that is configured with the timeout value.

At 520, the second device 120 transmits frames of a traffic stream to the first device 110. When receiving the frames, the first device 110 may place the frames into an associated OOO-capable queue based on the TID of the frames. In some embodiments, there could be multiple OOO queues assigned with different timeout values at the first device 110, and when receiving frame(s) with an associated TID value, the first device 110 may select an OOO queue from the multiple OOO queues based on the associated TID value, and place the frame(s) in the selected OOO queue. During transmission 520, frame loss may occur.

At 530, when one or more frames preceding a received frame are missing, the first device 110 may deliver the received frame in an in-order (IO) fashion if the missing frame(s) are recovered before the timeout value expires, or in an OOO fashion if the missing frame(s) are not recovered before the timeout expiration. If there is no missing frames preceding the received frame, the first device 110 may deliver the received frame to the upper layers in the IO fashion.

As mentioned, conventional IO delivery mechanisms causes increased latency when frames are lost or delayed, while the immediate OOO delivery mechanisms causes unreliability and increased recovery overhead at the upper layers. The proposed process 500 enables OOO delivery using OOO-capable queues with timeout control, allowing frames to be delivered promptly when waiting for missing frames would be too costly-thus balancing between reliability and timeliness.

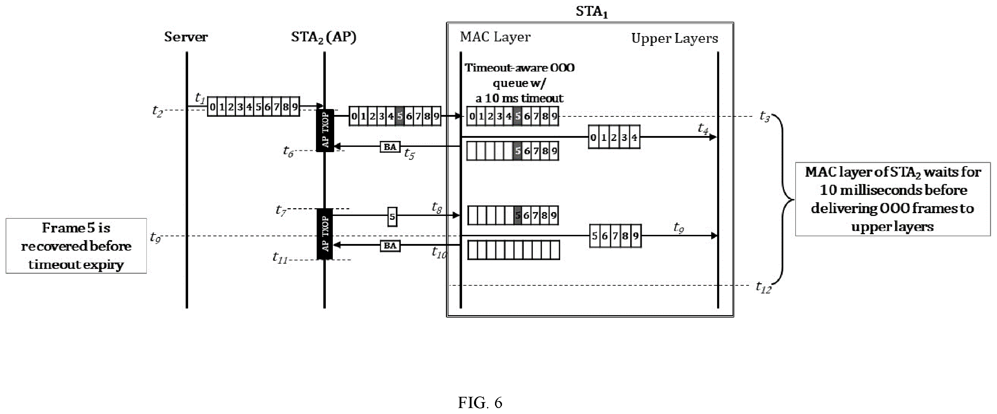

FIG. 6 illustrates a stream mapped to a timeout-aware OOO queue, where a missing frame is recovered before queue timeout expires, therefore, OOO-received frames are delivered to the upper layer in an IO fashion. In FIG. 6, STA₁ can be an example implementation of the non-AP STA 110, and the STA₂ can be an example implementation of the AP STA 120.

The Server and STA₁ (non-AP STA) exchange real-time traffic (e.g., voice, video) via STA₂ (AP). From STA₁'s perspective, the incoming frames belonging to this traffic stream are mapped to an OOO queue with an assigned timeout value, e.g., 10-millisecond. STA₂ receives a set of frames at time *t₁* from the Server. STA₂ transmits these frames (i.e., frames 0 through 9) to STA₁ at time *t₃*, during STA₂'s TXOP obtained at *t₂.* Except frame 5, the rest of the frames are successfully received by STA₁ at time *t₃*. Since frames 0 through 9 are received by a timeout-aware OOO queue whose timeout value is 10 milliseconds, starting at *t₃* (or at or before *t₄*, depending on MAC implementation), the MAC layer of STA₁ waits for 10 milliseconds to recover frame 5, before delivering the OOO-received frames (i.e., frames 6, 7, 8 and 9) to the upper layer. If frame 5 is not received by time *t₁₂*, the MAC layer of STA₁ will deliver the OOO frames to the upper layer in an OOO fashion. In FIG. 6, it is considered in the scenario where the frame is recovered before the 10-millisecond timeout time (i.e., before *t₁₂*)*.* In this scenario, since the BA frame signaling the loss of frame 5 at time *t₅* is sent at the end of the first TXOP and right before it expired at *t₆*, STA₂ must acquire another TXOP before it can retransmit frame 5. As shown in FIG. 6, frame 5 is recovered at time *t₈* during STA₂'s TXOP that is acquired at time *t₇.* Therefore, the MAC layer of STA₁ delivers frames 5 through 9 to the upper layer in an IO fashion at time *t₉*.

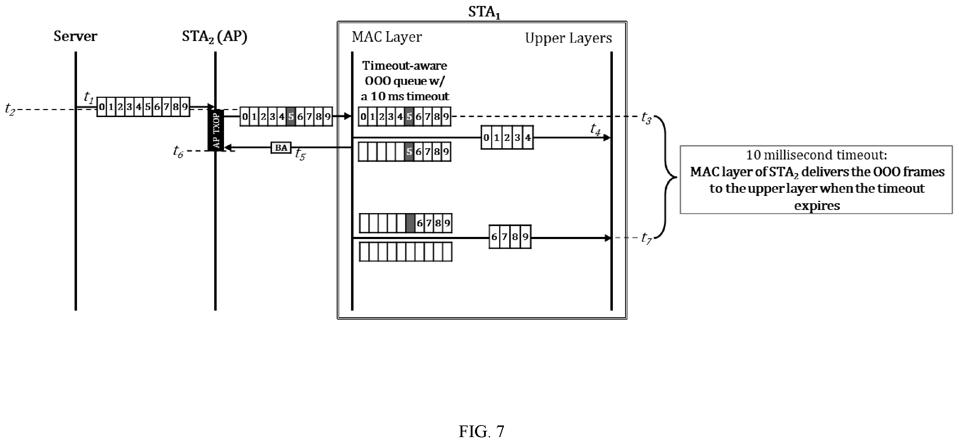

FIG. 7 illustrates a stream mapped to a timeout-aware OOO queue, where a missing frame is not recovered before the queue's designated timeout, therefore, OOO-received frames are delivered to the upper layer in an OOO fashion. In FIG. 7, the 10-millsecond timeout interval is between *t₃* to *t₇.* Since frame 5 is not received by *t₇,* the MAC layer of STA₁ delivers the OOO-received frames, i.e., frames 6, 7, 8 and 9, to the upper layer at *t₇.*

In some embodiments, frame 5 can still be recovered, depending on the negotiated policies. For instance, STA₁ may use QoS Characteristics to inform the AP about the frame delay bound of the frames belonging to this TID. If a TID is mapped to an OOO queue whose timeout value is x millisecond, the STA may announce a delay bound related to the timeout value for the frames of this traffic stream. The delay bound may be less than, equal to, or larger than the timeout value. For example, STA₁ may announce an x millisecond delay bound.

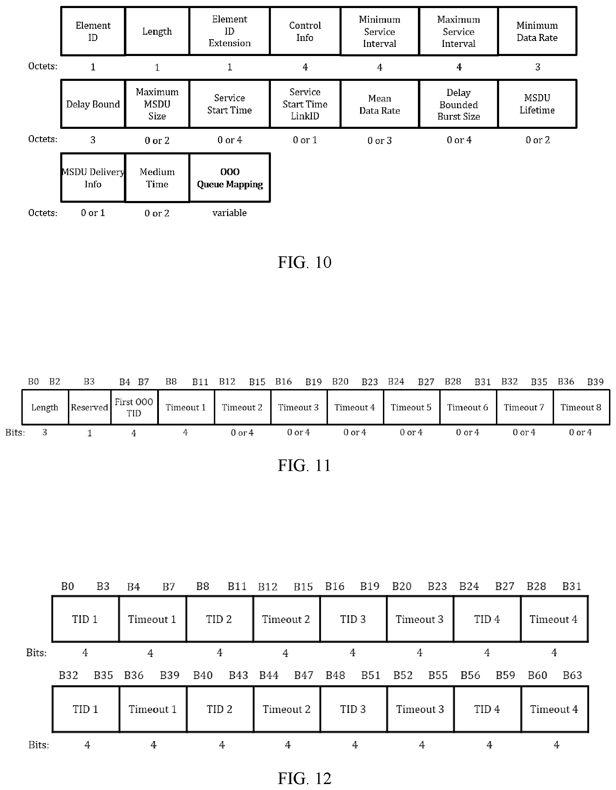

In some embodiments, the timeout values assigned to the OOO-capable queues are determined as follows. A STA may collect the recovery time interval of missing and erroneous frames including MPDUs and/or MSDUs over time. The STA then generates the distribution of recovery time intervals, determines the timeout values based on the distribution of the recovery time intervals, a number of the OOO queues and other optional parameters (e.g. TID(s)), and assigns the timeout values to the OOO queues. This process can be referred to as "preparing the mapping of OOO queues." In some embodiments, the mapping of queues may include a number of the OOO queues; TID value(s) associated with the OOO queues, and/or timeout values assigned to the OOO queues. Example formats indicative of the mapping of OOO queues will be described with reference to FIGS. 10 to 12.

To determine the timeout values for the OOO queues, the STA may split the distribution of the recovery time intervals into *N* quantiles, where *N* is the number of OOO queues, and assign *N* timeout values corresponding to bounds of the *N* quantiles to the OOO queue, respectively. For example, a timeout value used by an OOO queue may be an inclusive lower bound of a quantile corresponding to the queue.

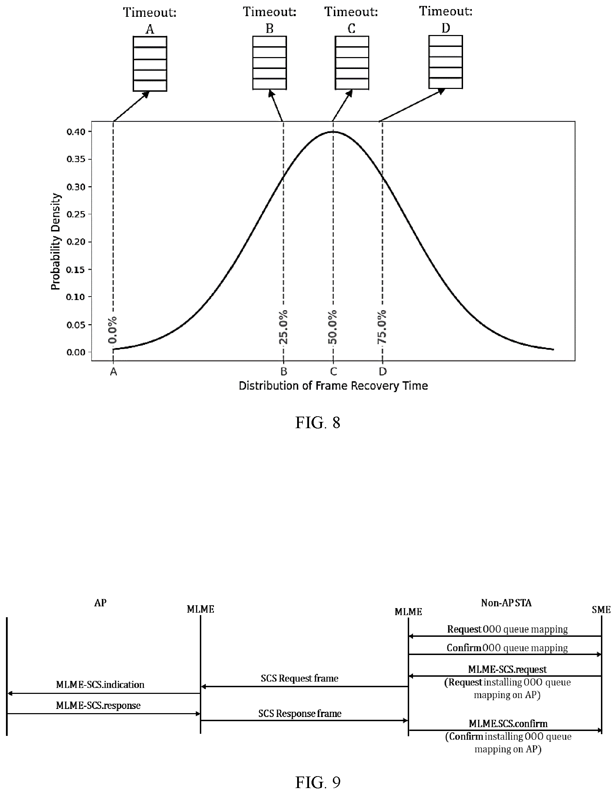

FIG. 8 illustrates an example distribution of frame recovery time intervals with the distribution divided into four quantiles in accordance with some embodiments of the present disclosure.

As illustrated, a Gaussian distribution is used to split the distribution of frame (MPDU/MSDU) recovery time intervals into four quantiles corresponding to four OOO queues. The first OOO queue has a timeout value of 0, delivering frames immediately to upper layers as soon as received. The next three queues are timeout-aware OOO queues, which have timeout values 'B', 'C', and 'D', matching the 25%, 50%, and 75% quantiles of the frame recovery time, respectively. The timeout value that each OOO queue uses is the inclusive lower bound of its corresponding quantile. The lower bound is used because the upper bound of the right-most quantile is the same as IO delivery.

Multiple timeout-aware OOO queues may offer flexibility in balancing between latency and reliability. Applications on a STA may create Stream Classification Service (SCS) streams that map to specific OOO queues based on their latency-reliability needs. The MAC layer may assign the SCS stream to the OOO-capable queue with the closest timeout. For instance, with reference to FIG. **8Error! Reference source not found.,** if an application requests a timeout of B + 10 microseconds and the closest available timeout is B, the traffic stream will be mapped to the TID associated with queue B.

In some embodiments, the STA may map a traffic stream to a TID value of a queue, among the OOO-capable queues, based on a latency level or a reliability level of the traffic stream. For example, the STA may determine a queue having a minimum timeout value that satisfies the reliability level of the traffic stream, and then map the traffic stream to a TID value of the determined queue.

Tracking the timeout values of frames in an OOO Queue can be implemented as follows.

In some embodiments, since device drivers and operating systems usually keep track of the arrival time of frames, implementing the proposed timeout-aware OOO queues can be accomplished by maintaining one timer per OOO queue. With this method, whenever there is at least one OOO-received frame in an OOO queue, the timer of the queue keeps track of the oldest OOO-received frame in the queue. When the timer expires or a gap in reception is filled, the timer is updated to keep track of the time since the arrival of the next OOO frame in the queue, if any. When the timer updates, the duration of the timer may take into consideration the difference in the arrival time of the next OOO received frame and the current time.

For example, an OOO frame *F₁* is assumed to have been received at time *t₁*, in an OOO queue whose timeout is 10 milliseconds. The timer of the queue is set to expire in 10 milliseconds, at time *t₁* + 0.01 seconds. At time *t₁* + 0.005, frame *Fₘ* is received, which fills the gap for frame *F₁* and the next four subsequent frames, i.e., frames *F₂*, *F₃*, *F₄*, and *F₅,* meaning that, frames *Fₘ*, *F₁, F₂*, *F₃*, *F₄*, and *F₅* are all received in order. At this time, frames *Fₘ, F₁, F₂*, *F₃*, *F₄*, and *F₅* are delivered to the upper layers in an IO fashion. However, in the same OOO queue, there is a gap between frame *F₅* and the next frame, which is frame *F₇*. At this time, the timer of the OOO queue is to expire at *t₇ +* 0.01, where *t₇* is the arrival time of frame F₇. If the timer of the OOO queue has expired (i.e., current time is equal to or later than *t₇ +* 0.01), frame *F₇* is delivered to the upper layer in an OOO fashion and the algorithm keeps tracking of the timer as it moves forward to the next OOO received frame, if any.

An example algorithm is shown below.

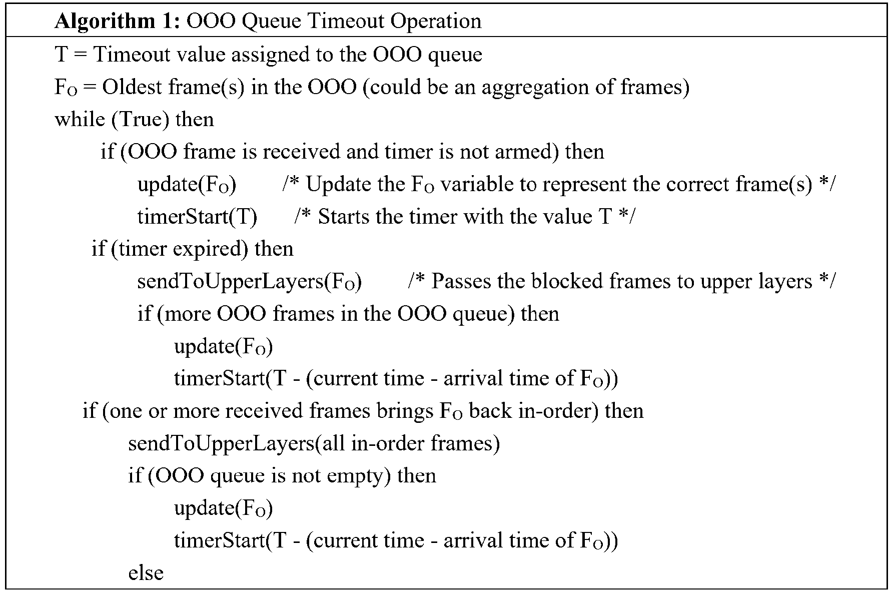

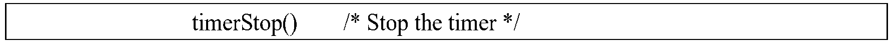

In accordance with the proposed tracking method, the non-AP STA (e.g. first device 110) may maintain one timer for one OOO queue to ensure that a received frame is kept in the queue no longer than the timeout value assigned to the queue. Upon reception of at least one frame, the non-AP STA may start the timer with a duration equal to the timeout value when the queue is in an empty state and then place the at least one received frame into the queue. The non-AP STA tracks the oldest frame remaining in the queue (i.e. F_{O} in the algorithm), and may determine if the oldest frame remaining in the queue has changed (e.g., the timer expires or the received frames brings F_{O} back in-order, and the queue is not empty). If so, it may update the timer with a duration determined based on an arrival time of the next oldest frame remaining in the queue, a current time and the timeout value assigned to the queue, i.e., the timer starts with duration (T - (current time - arrival time of F_{O})).

In accordance with the proposed tracking method, if the missing frame(s) preceding the oldest frame are recovered before expiration of the timer, the non-AP STA may deliver the one or more recovered missing frames and the oldest frame to upper layers in an in-order (IO) fashion. If the missing frame(s) are not recovered before expiration of the timer, the non-AP STA may deliver the oldest frame to the upper layers in an OOO fashion.

When OOO queues are enabled and configured on a non-AP STA (e.g. the first device 110), the non-AP STA may use SCS to configure stream-to-TID mapping on the AP (e.g., the second device 120). For instance, if the non-AP STA uses an OOO queue with a timeout value of *x* milliseconds and TID value *y,* the non-AP STA can request the MAC layer of the AP (or another non-AP STA sending to the non-AP STA) to map a specific traffic stream (e.g., using specific filters) to TID value y when sending frames to the non-AP STA.

On the other hand, when OOO queues are enabled and configured on the AP (or another non-AP STA), to send uplink (UL) frames using specific TIDs assigned to these OOO queues, a non-AP STA can use specific differentiated services code point (DSCP) values for OOO streams, which may be then used by the Logical Link Control (LLC) above MAC to map those specific DSCP values to specific TID values. In some embodiments, an OOO queue is assigned a timeout value and enabled at the AP STA, the non-AP may map a DSCP to a TID value associated with the TID value and transmit frame(s) using the TID value to the AP STA.

FIG. 9 illustrates a process of a non-AP STA that prepares and shares mapping of OOO-capable queues in accordance with some embodiments of the present disclosure. In FIG. 9, a Station Management Entity (SME) of the non-AP STA uses MAC layer management entity (MLME) to enable, configure, and share mapping of OOO queues.

The SME of the non-AP STA uses MLME to request the enablement of OOO queues in the MAC layer. This request may enable OOO queues for UL, DL, or both directions of frame exchange. Specifically, the non-AP STA may measure the recovery time of DL frames by calculating the interval between the transmission of each acknowledgment (e.g. BA) frame indicating frame loss and the reception of the corresponding missing frames. For UL traffic, the non-AP STA can measure frame recovery time intervals by calculating the interval between the reception of an acknowledgment frame indicating frame loss and the reception of a subsequent acknowledgment frame confirming the recovery of the missing frames.

The request message exchanged between the SME and MLME of the non-AP STA may also be used to configure OOO queues by including parameters such as the number of OOO queues, the TIDs associated with those queues, and the desired maximum and minimum timeout values. On the non-AP STA, the confirm message received from the MLME confirms the enablement of timeout-aware OOO queues. The confirm message may also convey additional information such as the assigned timeout values for each OOO queue, the associated TIDs, and the current distribution of timeout values as measured by the MAC layer. Such information about OOO queues may be shared with upper layers. In this embodiment, it is assumed that the non-AP STA determines the timeout values for both UL and DL traffic and prepares the mapping of OOO queues for UL and DL traffic. Accordingly, the SME of the non-AP STA uses MLME and the SCS procedure to share the determined mapping with the AP STA, enabling the use of OOO queues when receiving frames associated with specific TIDs from this non-AP STA.

In some embodiments, the mapping of queues capable of OOO frame delivery may comprise a first mapping of queues for UL traffic, a second mapping of queues for DL traffic, or both. As an example, a STA_{X} prepares a mapping for OOO queues when receiving traffic from the AP. This mapping is referred to as M_{DL}. The STA_{X} may share mapping M_{DL} with the AP. Alternatively or additionally, the STA_{X} may prepare and share another mapping, referred to as M_{UL}, that is better suited for UL traffic transmission and frame reception by the AP. For example, separate OOO mappings for DL and UL traffic may be used when the traffic streams of the non-AP STA have differing requirements in terms of delay and reliability for incoming and outgoing traffic. This flexibility allows the non-AP STA to optimize performance based on the specific QoS needs of each traffic direction.

For peer-to-peer communication, a STA may measure incoming and outgoing frames and calculate distributions of recovery timer intervals for both traffic directions. The STA may determine timeout values for both incoming and outgoing traffic based on respective distributions, and assign the timeout values to the OOO queues.

The mapping of OOO queue can be prepared locally or in delegated way. Each non-AP STA can locally determine the distribution of frame recovery time intervals for both UL and DL and prepare the mapping of OOO queues. For DL, it involves measuring the interval between the recovery of DL frames. For UL, it involves measuring the interval between sending a frame and receiving an ACK confirming its reception. Generally, for communication between a STA_{X} and STA_{Y}, the delay distribution and mapping of delays can be: (1) measured by STA_{X}, then shared with STA_{Y}, or (2) measured by STA_{Y}, then shared with STA_{X}, or (3) measured by STA_{X} and STA_{Y} separately. In the third scenario, each STA needs to request from the other party to share its mapping, in case they use different configurations such as the number of queues and permissible timeout values and TIDs.

Preparing the mapping of OOO queues (i.e., sampling frame recovery delays, preparing a distribution of recovery times, assigning timeout values to OOO frames) may be process-intensive for certain STAs with limited processing resources. For instance, constructing the distribution of recovery time intervals on a STA may necessitate tracking packet recovery delays over fixed or variable time windows, analyzing their distribution, and performing the necessary mapping. If a STA lacks the capability (e.g., processing power, storage) to execute these computations, it may delegate these tasks to a more powerful entity, such as the AP, which can manage the calculations and subsequently provide the mapping results to the STA.

For instance, consider a scenario where STA_{X} needs to prepare the mapping of OOO queues. This mapping can be delegated to the AP. More broadly, when two STAs communicate, either party can determine the distribution of frame recovery times and share the mapping partially (e.g., distribution of recovery delays) or completely (e.g., number of queues and assignment of timeout values to OOO queues). To this end, two procedures that involve sharing the mapping of OOO queues via SCS procedures are proposed.

The first procedure involves STA_{X} requesting mapping of OOO queues from STA_{Y}. This procedure begins with STA_{X} sending a SCS Request frame with a Robust Action value of *V_{X},* where *V_{X}* is a unique value that is not used by the features of the IEEE 802.11 standards and not colliding with the other defined values in this disclosure. The procedure dictates that STA_{Y} replies to this request with an SCS Response frame with a Robust Action value of *V_{Y}*, where *V_{Y}* is another unique value that is not used by the features of the IEEE 802.11 standards and not colliding with the other defined values in this disclosure.

FIG. 10 shows that the SCS Response frame holds a new field, named "OOO Queue Mapping", that is variable octets in size and is included in the QoS Characteristic element. This field holds the mapping of OOO queues.

The second procedure that involves sharing mapping of OOO queues involves STA_{X} installing a mapping of OOO on STA_{Y}. For instance, STA_{X} prepares a mapping for OOO queues, denoted as M_{X}, and shares this mapping with STA_{Y} and requests STA_{Y} to use this mapping when receiving frames from STA_{X} (or other STAs). This procedure begins with STA_{X} sending a SCS Request frame with a Robust Action value of V*_{I}*, where *V_{I}* is a unique value that is not used by the features of the IEEE 802.11 standards and not colliding with the other defined values in this disclosure. STA_{X} shares a mapping with STA_{Y} by using the same "OOO Queue Mapping" subfield presented in FIG. 10. The procedure then dictates that STA_{Y} replies to this request with an SCS Response frame with a Robust Action value of *V_{J}* or *V_{K}*, where *V_{J} and V_{K}* are unique values that are not used by the features of the IEEE 802.11 standards and not colliding with the other defined values in this disclosure. If a Robust Action value of *V_{J}* is indicated by the SCS Response frame, the mapping is accepted. If a value of *V_{K}* is indicated in the SCS Response frame, the mapping is rejected.

FIG. 11 shows a possible format for the proposed "OOO Queue Mapping". This format can hold up to eight Timeout subfields. The "Length" subfield indicates the number of OOO queues that are supported. The "First OOO TID" subfield indicates the TID value of the first OOO queue. This structure enforces a rule that TIDs for the OOO queues must be sequentially assigned. For example, if there are four OOO queues and the TID of the first OOO queue is 8, the OOO TIDs must be 8, 9, 10 and 11.

If TIDs for the OOO queues are not required to be sequentially assigned, the format for the OOO TID Timeout field shown in FIG. 12 may be used instead, where the TID of each Timeout subfield is explicitly denoted. The actual timeout duration used by the TID queue may be calculated by taking the square of the corresponding Timeout subfield. The duration is in units of milliseconds. With 4 bits available for each Timeout subfield, the timeout duration has a range of 0 to 49 milliseconds. Different methods to calculate the actual timeout duration are also possible.

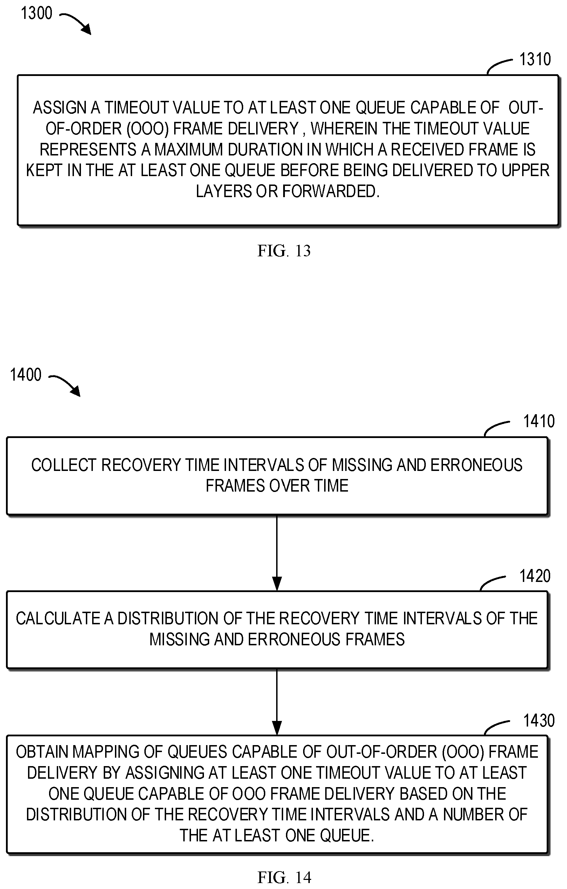

FIG. 13 illustrates a flowchart of a method 1300 implemented by a device in accordance with some embodiments of the present disclosure. For the purpose of discussion, the method 1300 will be described from the perspective of STA 110 functioning as non-AP STA in FIG. 1. It would be understood that the method 1300 can be implemented by STA 120 functioning as AP.

At block 1310, the first device assigns a timeout value to at least one queue capable of out-of-order (OOO) frame delivery, wherein the timeout value represents a maximum duration in which a received frame is kept in the at least one queue before being delivered to upper layers or forwarded.

In some embodiments, the first device may deliver, in a case that one or more missing frames preceding the received frame are recovered before expiration of the timeout value, the recovered missing frames and received frame to the upper layers in an in-order (IO) fashion.

In some embodiments, the first device may deliver, in a case that one or more missing frames preceding the received frame are not recovered before expiration of the timeout value, received frame to the upper layers in an OOO fashion.

In some embodiments, the first device may further determine that there is no missing frames preceding the received frame; and deliver the received frame to the upper layers in the IO fashion.

In some embodiments, the first device may further announce a frame delay bound related to the timeout value for the traffic stream associated with the at least one queue.

In some embodiments, the first device may further associate one or more traffic identifier (TID) values to the at least one queue.

In some embodiments, the first device may further request a second device to map one or more traffic streams to the one or more TID values when sending one or more frames of the traffic streams to the first device.

In some embodiments, the first device may further map a differentiated services code point (DSCP) to a TID value, wherein a queue capable of OOO frame delivery and associated with the TID value is assigned a timeout value and enabled at a second device; and transmit, to the second device, one or more frames using the TID value.

In some embodiments, the at least one queue comprises multiple OOO queues capable of OOO frame delivery that are assigned with different timeout values, and the first device may further receive one or more frames with an associated TID value; select an OOO queue from the multiple OOO queues based on the associated TID value; and place the one or more frames in the selected OOO queue.

In some embodiments, the first device may further request a medium access control (MAC) layer management entity (MLME) to enable the at least one OOO queue capable of OOO frame delivery in the MAC layer.

In some embodiments, the first device may further share mapping of queues capable of OOO frame delivery with a second device, wherein the mapping of queues capable of OOO frame delivery includes at least one of the following: a number of the at least one queue; one or more TID values associated with the at least one queue; or one or more timeout values assigned to the at least one queue.

In some embodiments, to share the mapping of queues capable of OOO frame delivery with a second device, the first device may receive, from the second device, a stream classification service (SCS) request for the mapping of queues capable of OOO frame delivery; and transmit, to the second device, an SCS response including the mapping of queues capable of OOO frame delivery.

In some embodiments, to share mapping of queues capable of OOO frame delivery with a second device, the first device may transmit, to the second device, an SCS request including the mapping of queues capable of OOO frame delivery to request the second device to use the mapping; and receive, from the second device, an SCS response indicating whether the mapping is accepted or rejected.

In some embodiments, the mapping of queues capable of OOO frame delivery may include a single TID value, and the one or more timeout values are associated with sequential TIDs starting from the single TID.

In some embodiments, the mapping of queues capable of OOO frame delivery may include one or more TIDs, and each of the one or more timeout values is associated with a respective one of the one or more TIDs.

In some embodiments, the mapping of queues capable of OOO frame delivery comprises at least one of: a first mapping of queues for uplink (UL) traffic or a second mapping of queues for downlink (DL) traffic.

In some embodiments, the first device may further prepare the mapping of queues capable of OOO frame delivery locally based on a distribution of frame recovery time intervals for UL traffic or DL traffic.

In some embodiments, the first device may further delegate preparation of the mapping of queues capable of OOO frame delivery to a device other than the first device.

FIG. 14 illustrates a flowchart of a method 1400 implemented by a device in accordance with some embodiments of the present disclosure. For the purpose of discussion, the method 1400 will be described from the perspective of STA 110 functioning as non-AP STA in FIG. 1. It would be understood that the method 1400 can be implemented by STA 120 functioning as AP.

At 1410, the device collects recovery time intervals of missing and erroneous frames over time. At 1420, the device calculates a distribution of the recovery time intervals of the missing and erroneous frames. At 1430, the device obtains mapping of queues capable of out-of-order (OOO) frame delivery by assigning at least one timeout value to at least one queue capable of OOO frame delivery based on the distribution of the recovery time intervals and a number of the at least one queue.

In some embodiments, assigning the at least one timeout value to the at least one queue may comprise: splitting the distribution of the recovery time intervals into *N* quantiles, where *N* is the number of the at least one queue; and assigning *N* timeout values corresponding to bounds of the *N* quantiles to the at least one queue, respectively.

In some embodiments, a timeout value used by one of the at least one queue is an inclusive lower bound of a quantile corresponding to the queue.

In some embodiments, to collect recovery time intervals of missing and erroneous frames over time, the device may measure the recovery time intervals of incoming frames by calculating an interval between transmission of an acknowledgment frame indicating frame loss and reception of corresponding missing and erroneous frames.

In some embodiments, to collect recovery time intervals of missing and erroneous frames over time, the device may measure the recovery time intervals of outgoing frames by calculating an interval between reception of an acknowledgement frame indicating frame loss and the reception of a subsequent acknowledgement frame confirming recovery of corresponding missing and erroneous frames.

In some embodiments, the device may further determine timeout values for both incoming and outgoing traffic based on respective distributions of frame recovery time intervals for the incoming and outgoing traffic.

In some embodiments, the device may further request a medium access control (MAC) layer management entity (MLME) of the device to obtain the mapping of queues capable of OOO frame delivery, wherein a request message for the mapping of queues capable of OOO frame delivery includes at least one of: a number of queues capable of OOO frame delivery; traffic identifier (TIDs) associated with the queues; a maximum timeout value; or a minimum timeout value.

In some embodiments, to obtain mapping of queues capable of OOO frame delivery, the device may associate at least one TID value with the at least one queue, respectively.

In some embodiments, the device may further map a traffic stream to a TID value of a queue, among the at least one queue, based on a latency level or a reliability level of the traffic stream.

In some embodiments, to map a traffic stream to a TID value of a queue among the at least one OOO queue, the device may further determine a queue, among the at least one queue, having a minimum timeout value that satisfies the reliability level of the traffic stream; and map the traffic stream to the TID value of the determined queue.

In some embodiments, the device may further inform a sender of the traffic stream that a frame delay bound of frames belonging to the TID value is equal, less than, or larger than to the timeout value of the queue.

In some embodiments, the device may further maintain one timer for the at least one queue capable of OOO frame delivery to ensure that a received frame is kept in the queue no longer than the timeout value assigned to the queue.

In some embodiments, the device may further start the timer with a duration equal to the timeout value when the queue is in an empty state and then place at least one received frame into the queue.

In some embodiments, the device may further track an oldest frame remaining in the queue; determine that the oldest frame remaining in the queue has changed; and update the timer with a duration determined based on an arrival time of the next oldest frame remaining in the queue, a current time and the timeout value assigned to the queue.

In some embodiments, the device may further deliver, in a case that one or more missing frames preceding the oldest frame are recovered before expiration of the timer, the one or more recovered missing frames and the oldest frame to upper layers in an in-order (IO) fashion; and deliver, in a case that that the one or more missing frames preceding the oldest frame are not recovered before expiration of the timer, the oldest frame to the upper layers in an OOO fashion.

In some embodiments, an apparatus capable of performing any of the method 1300 (for example, the non-AP STA 110 or AP STA 120 in FIG. 1) may comprise means for performing the respective steps of the method 1300. The means may be implemented in any suitable form. For example, the means may be implemented in a circuitry or software module.

In some embodiments, the apparatus comprises: means for assigning a timeout value to at least one queue capable of out-of-order (OOO) frame delivery, wherein the timeout value represents a maximum duration in which a received frame is kept in the at least one queue before being delivered to upper layers or forwarded.

In some embodiments, the apparatus further comprises means for performing other steps in some embodiments of the method 1300. In some embodiments, the means comprises at least one processor; and at least one memory including computer program code, the at least one memory and computer program code configured to, with the at least one processor, cause the performance of the apparatus.

In some embodiments, an apparatus capable of performing any of the method 1400 (for example, the non-AP STA 110 or the AP STA 120 in FIG. 1) may comprise means for performing the respective steps of the method 1400. The means may be implemented in any suitable form. For example, the means may be implemented in a circuitry or software module.

In some embodiments, the apparatus comprises: means for collecting recovery time intervals of missing and erroneous frames over time; means for calculating a distribution of the recovery time intervals of the missing and erroneous frames; and means for obtaining mapping of queues capable of out-of-order (OOO) frame delivery by assigning at least one timeout value to at least one queue capable of OOO frame delivery based on the distribution of the recovery time intervals and a number of the at least one queue.

In some embodiments, the apparatus further comprises means for performing other steps in some embodiments of the method 1400. In some embodiments, the means comprises at least one processor; and at least one memory including computer program code, the at least one memory and computer program code configured to, with the at least one processor, cause the performance of the apparatus.

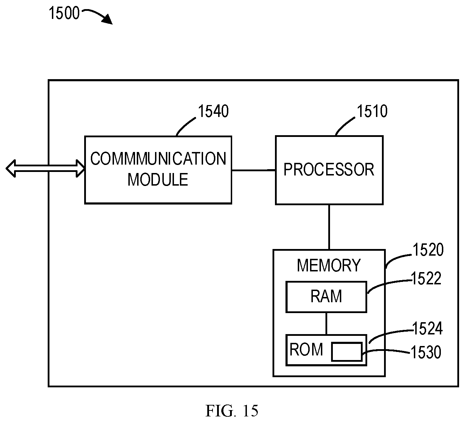

FIG. 15 illustrates a simplified block diagram of a device 1500 that is suitable for implementing some example embodiments of the present disclosure. The device 1500 may be provided to implement a communication device, for example, STA 110 functioning as a non-AP device and STA 120 functioning as an AP device as shown in FIG. 1. As shown, the device 1500 includes one or more processors 1510, one or more memories 1520 coupled to the processor 1510, and one or more communication modules 1540 coupled to the processor 1510.

The communication module 1540 is for bidirectional communications. The communication module 1540 has at least one antenna to facilitate communication. The communication interface may represent any interface that is necessary for communication with other network elements.

The processor 1510 may be of any type suitable to the local technical network and may include one or more of the following: general purpose computers, special purpose computers, microprocessors, digital signal processors (DSPs) and processors based on multicore processor architecture, as non-limiting examples. The device 1500 may have multiple processors, such as an application specific integrated circuit chip that is slaved in time to a clock which synchronizes the main processor.

The memory 1520 may include one or more non-volatile memories and one or more volatile memories. Examples of the non-volatile memories include, but are not limited to, a Read Only Memory (ROM) 1524, an electrically programmable read only memory (EPROM), a flash memory, a hard disk, a compact disc (CD), a digital video disk (DVD), and other magnetic storage and/or optical storage. Examples of the volatile memories include, but are not limited to, a random access memory (RAM) 1522 and other volatile memories that will not last in the power-down duration.

A computer program 1530 includes computer executable instructions that are executed by the associated processor 1510. The program 1530 may be stored in the ROM 1524. The processor 1510 may perform any suitable actions and processing by loading the program 1530 into the RAM 1522.

The embodiments of the present disclosure may be implemented by means of the program 1530 so that the device 1500 may perform any process of the disclosure as discussed with reference to FIGS. 13 and 14. The embodiments of the present disclosure may also be implemented by hardware or by a combination of software and hardware.

In some example embodiments, the program 1530 may be tangibly contained in a computer-readable medium which may be included in the device 1500 (such as in the memory 1520) or other storage devices that are accessible by the device 1500. The device 1500 may load the program 1530 from the computer-readable medium to the RAM 1522 for execution. The computer-readable medium may include any types of tangible non-volatile storage, such as ROM, EPROM, a flash memory, a hard disk, CD, DVD, and the like.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer-readable storage medium. The computer program product includes computer-executable instructions, such as those included in program modules, being executed in a device on a target real or virtual processor, to carry out the method 1300 or 1400 as described above with reference to FIG. 13 or 14. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program codes or related data may be carried by any suitable carrier to enable the device, apparatus or processor to perform various processes and operations as described above. Examples of the carrier include a signal, computer-readable medium, and the like.

The computer-readable medium may be a computer-readable signal medium or a computer-readable storage medium. A computer-readable medium may include but not limited to an electronic, magnetic, optical, electromagnetic, infrared, or semiconductor system, apparatus, or device, or any suitable combination of the foregoing. More specific examples of the computer-readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. The term "non-transitory," as used herein, is a limitation of the medium itself (i.e., tangible, not a signal) as opposed to a limitation on data storage persistency (e.g., RAM vs. ROM).

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. A device comprising:
means for collecting recovery time intervals of missing and erroneous frames over time; means for calculating a distribution of the recovery time intervals of the missing and erroneous frames; and
means for obtaining mapping of queues capable of out-of-order (OOO) frame delivery by assigning at least one timeout value to at least one queue capable of OOO frame delivery based on the distribution of the recovery time intervals and a number of the at least one queue.

2. The device of claim 1, wherein assigning the at least one timeout value to the at least one queue comprises:
splitting the distribution of the recovery time intervals into *N* quantiles, where *N* is the number of the at least one queue; and
assigning *N* timeout values corresponding to bounds of the *N* quantiles to the at least one queue, respectively.

3. The device of claim 1, wherein a timeout value used by one of the at least one queue is an inclusive lower bound of a quantile corresponding to the queue.

4. The device of claim 1, wherein to collect recovery time intervals of missing and erroneous frames over time, the device comprises:
means for measuring the recovery time intervals of incoming frames by calculating an interval between transmission of an acknowledgment frame indicating frame loss and reception of corresponding missing and erroneous frames.

5. The device of claim 1, wherein to collect recovery time intervals of missing and erroneous frames over time, the device comprises:
means for measuring the recovery time intervals of outgoing frames by calculating an interval between reception of an acknowledgement frame indicating frame loss and the reception of a subsequent acknowledgement frame confirming recovery of corresponding missing and erroneous frames.

6. The device of claim 1, wherein the device further comprises:
means for determining timeout values for both incoming and outgoing traffic based on respective distributions of frame recovery time intervals for the incoming and outgoing traffic.

7. The device of claim 1, wherein the device further comprises:
means for requesting a medium access control (MAC) layer management entity (MLME) of the device to obtain the mapping of queues capable of OOO frame delivery,
wherein a request message for the mapping of queues capable of OOO frame delivery includes at least one of:
a number of queues capable of OOO frame delivery;
traffic identifier (TIDs) associated with the queues;
a maximum timeout value; or
a minimum timeout value.

8. The device of claim 1, wherein to obtain mapping of queues capable of OOO frame delivery, the device comprises:
means for associating at least one TID value with the at least one queue, respectively.

9. The device of claim 8, wherein the device further comprises:
means for mapping a traffic stream to a TID value of a queue, among the at least one queue, based on a latency level or a reliability level of the traffic stream.

10. The device of claim 9, wherein to map a traffic stream to a TID value of a queue among the at least one OOO queue, the device further comprises:
means for determining a queue, among the at least one queue, having a minimum timeout value that satisfies the reliability level of the traffic stream; and
means for mapping the traffic stream to the TID value of the determined queue.

11. The device of claim 9, wherein the device further comprises:
means for informing a sender of the traffic stream that a frame delay bound of frames belonging to the TID value is equal, less than, or larger than to the timeout value of the queue.

12. The device of claim 1, wherein the device further comprises:
means for maintaining one timer for the at least one queue capable of OOO frame delivery to ensure that a received frame is kept in the queue no longer than the timeout value assigned to the queue.

13. The device of claim 12, wherein the device further comprises:
means for starting the timer with a duration equal to the timeout value when the queue is in an empty state and then place at least one received frame into the queue.

14. A method comprising:
collecting recovery time intervals of missing and erroneous frames over time;
calculating a distribution of the recovery time intervals of the missing and erroneous frames; and
obtaining mapping of queues capable of out-of-order (OOO) frame delivery by assigning at least one timeout value to at least one queue capable of OOO frame delivery based on the distribution of the recovery time intervals and a number of the at least one queue.

15. A computer readable medium comprising instructions which, when executed by an apparatus, cause the apparatus to perform at least the following:
collecting recovery time intervals of missing and erroneous frames over time;
calculating a distribution of the recovery time intervals of the missing and erroneous frames; and
obtaining mapping of queues capable of out-of-order (OOO) frame delivery by assigning at least one timeout value to at least one queue capable of OOO frame delivery based on the distribution of the recovery time intervals and a number of the at least one queue.
